# EUROPEAN PATENT SPECIFICATION

(11) **EP 4 629 669 B1**
(45) Date of publication and mention of the grant of the patent: **09.12.2026**
(21) Application number: 25158386.0
(22) Date of filing: 17.02.2025
(51) Int. Cl.: H04W 4/46, H04W 4/40, G08G 1/0967, G08G 1/16, H04L 67/12, H04W 4/12

(54) **IDENTITY BASED ADDRESSING FOR INTER-VEHICLE WIRELESS NETWORK COMMUNICATION**
IDENTITÄTSBASIERTE ADRESSIERUNG FÜR KOMMUNIKATION ZWISCHEN FAHRZEUGEN IN EINEM DRAHTLOSEN NETZWERK
ADRESSAGE BASÉ SUR L'IDENTITÉ POUR COMMUNICATION DE RÉSEAU SANS FIL ENTRE VÉHICULES

(30) Priority: 01.04.2024 IN 202441026981
(43) Date of publication of application: 08.10.2025
(73) Proprietor: Harman International Industries, Inc., Stamford, Connecticut 06901 (US)
(72) Inventor: REDDY, Sridhar Vellenki, 560024 Bangalore (IN)
(74) Representative: Kraus & Lederer PartGmbB

(56) References cited:
- US-A1- 2016 105 775
- US-A1- 2022 019 813
- US-A1- 20230 341 233

## Description

### FIELD

The disclosure relates to inter-vehicle wireless network communication.

### BACKGROUND

There may be various reasons for one vehicle driver to communicate with another vehicle driver. For example, a first vehicle driver may wish to send a communication to an oncoming second vehicle driver about an incident that the first vehicle driver recently witnessed, which the second vehicle driver may soon encounter. Such a communication might be contextually relevant to the second vehicle driver for a relatively short duration, perhaps merely one minute or so. Some technologies may crowd-source such reports and make them available to drivers, perhaps under a subscription service. However, such technologies may not confirm for the first vehicle driver that the second vehicle driver received the communication.

There may also be other reasons for a first vehicle driver to send a communication to a second vehicle driver. Some reasons may be relevant on a real-time or near-real-time basis. For example, a first vehicle driver may wish to send a communication to a second vehicle driver about a vehicular interaction (such as requesting that the second vehicle driver yield on a roadway), an emergent situation (such as a flat tire, something sticking out from a trunk, or another vehicular issue), and so on. Other reasons may be more social in nature, such as permitting one or more occupants of a first vehicle to share a media experience with one or more occupants of a second vehicle, such as a song, a karaoke performance, or another type of audio and/or video experience.

Meanwhile, in a wireless communication network, communications to an end user (and/or to an end point) may be achieved by using a specific identifier associated with the end user (and/or with the end point). Such specific identifiers might include a unique name, a telephone number, an Internet Protocol (IP) address, a handle through a third-party service, and so on. Thus, for a first party to communicate with a second party, the first party typically establishes a specific identifier of the second party, for example by acquiring that specific identifier directly from the second party, or by referring to an open directory (e.g., a telephone directory).

However, automatic discovery mechanisms for establishing a specific identifier might not facilitate or even enable a first party to communicate with a second party who is unknown, on short notice and/or without going through a discovery process to establish the specific identifier of the second party. Current technology lacks methods and mechanisms for facilitating and/or enabling communication between a first vehicle driver and a second vehicle driver who are not known to each other, and/or whose specific identifiers within a wireless communication network (e.g., telephone numbers and/or IP addresses) are not known to each other.

US 2016/105775 A1 discloses a method for enabling a wireless voice conversation between vehicles, involving transmission of a broadcast or vehicle identifier for a host vehicle and for one or more other vehicles to a central facility of a service provider through a carrier system for establishing the conversation.

### SUMMARY

Various systems and methods are disclosed herein for identity-based addressing of wireless network communication from a first vehicle driver to a second vehicle driver. This may in turn enable and/or facilitate communication between the drivers even if they are not known to each other, and/or their specific identifiers within a wireless communication network (e.g., telephone numbers and/or IP addresses) are not known to each other.

Vehicle communication systems of contemporary vehicles may send and receive various wireless network transmissions for a variety of purposes. For example, vehicle communication systems may employ transmissions such as Vehicle-to-Everything (V2X) transmissions (which may include Vehicle-to-Vehicle (V2V) transmissions and/or Vehicle-to-Infrastructure (V2I) transmissions) for purposes of Advanced driver-assisted systems (ADAS), semi-autonomous driving systems, and/or autonomous driving systems. V2X transmission may be based on various wireless communication technologies, such as Bluetooth^{®}, Wi-Fi^{®}, and/or cellular communication technologies. (Bluetooth^{®} is a registered trademark of Bluetooth SIG, Inc., Kirkland, WA. Wi-Fi^{®} is a registered trademark of Wi-Fi Alliance, Austin, Texas.) V2X transmissions may carry various data that may be pertinent to identifying a vehicle, such as a location or a position, a time (e.g., in Universal Time reckoning), a vehicle length, a vehicle width, a vehicle height, a vehicle type, whether a trailer is attached to a vehicle, confidence, and so on). Accordingly, in various embodiments, vehicles may receive transmissions (such as V2X transmissions) that are broadcast by neighboring vehicles to other neighboring vehicles, which may carry vehicle-identifying data.

In some embodiments, the issues described above may be addressed by methods and/or systems in which a first vehicle processes a set of first transmissions sent by a corresponding set of second vehicles, in which each first transmission carries vehicle-identifying data, which may include a position as given by a Global Navigation Satellite System (GNSS) like the Global Positioning System (GPS). A user interface of the first vehicle may present a representation of the set of second vehicles, in the form of a map, an alternative-reality representation, or another visual representation. The user interface may then detect the identification of a selected second vehicle out of the set of second vehicles, such as by user selection of the vehicle on the user interface (for example, for touch-screen user interfaces, by a screen touch). The first vehicle may then establish a set of selected vehicle-identifying data based on the vehicle-identifying data of the first transmission sent by the selected second vehicle, such as a GNSS position of the selected second vehicle. The first vehicle may then generate a second transmission carrying the set of vehicle-identifying data (e.g., the GNSS position of the selected second vehicle), for use by a remote server in routing subsequent network transmissions to the selected vehicle, and may follow the second transmission by generating a set of third transmissions carrying data for a communication to the selected second vehicle.

In this way, the first vehicle driver may advantageously communicate with the second vehicle driver, even if the second vehicle driver is unfamiliar or unknown, by virtue of providing vehicle-identifying data received from the second vehicle to another element of a communication network, such as a remote server, which may determine a specific identifier (e.g. a telephone number and/or IP address) associated with the second vehicle. Following the provision of the vehicle-identifying data, the first vehicle may send a communication from the first vehicle driver to the remote server, which may then arrange for that communication to be sent to the second vehicle, suing the specific identifier to address the communication within the wireless communication network.

For some embodiments, the issues described above may be addressed by methods and/or systems in which a first vehicle receives a set of first V2X transmissions from a corresponding set of second vehicles, each first vehicular transmission carrying a vehicle position (e.g., a GNSS position). The first vehicle may then provide output, via an in-vehicle computing system, a visual representation of the set of second vehicles and a proximal portion of an environment around the first vehicle, such as in the form of a map or an augmented reality depiction. A selected second vehicle of the set of second vehicles may be provided as input via the in-vehicle computing system, and the first vehicle may transmit a second V2X transmission carrying the vehicle position corresponding with the selected second vehicle. The first vehicle may then send a set of third V2X transmissions carrying a communication to the selected second vehicle, followed by a set of third V2X transmissions to the selected second vehicle carrying data for a communication.

In this way, a driver of the first vehicle may advantageously send a communication to a driver of the second vehicle, based merely on a GNSS position received from, e.g., broadcast V2X transmissions sent by the second vehicle. The communication may reach the driver of the second vehicle even though the driver of the first vehicle has no awareness before-hand of a network communication address that may be used to send the communication.

In additional embodiments, the issues described above may be addressed by methods and/or systems in which a first vehicle may process a set of first transmissions from a corresponding set of second vehicles, each of which may carry a GNSS vehicle position. A visual representation of the set of second vehicles may be displayed via a user interface of the vehicle, and the user interface may detect an identification of a selected second vehicle (e.g., by detecting a touch-based interaction or other interaction with the user interface). A second transmission carrying the GNSS vehicle position of the selected second vehicle may then be generated and sent, followed by a set of third transmissions carrying data for a communication to the selected second vehicle.

In this way, the first vehicle may advantageously send a communication to the second vehicle based not on a specific identifier associated with addressing the second vehicle via a wireless communication network, but by virtue of GNSS positioning, which may in turn be obtained from wireless transmissions being broadcast by vehicles in the environment.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, wherein below:
FIGS. 1A-1F show a scenario of systems and/or methods using identity-based addressing for wireless network communication in accordance with one or more embodiments of the present disclosure;
FIGS. 2 to 4 show block diagrams of a remote server in accordance with one or more embodiments of the present disclosure;
FIGS. 5A and 5B, 6A and 6B, and 7 show methods of using identity-based addressing for wireless network communication in accordance with one or more embodiments of the present disclosure;
FIG. 8 shows an example partial view of an interior of a cabin of a vehicle, in accordance with one or more embodiments of the present disclosure; and
FIG. 9 shows a block diagram of an in-vehicle computing system or infotainment system, in accordance with one or more embodiments of the present disclosure;

### DETAILED DESCRIPTION

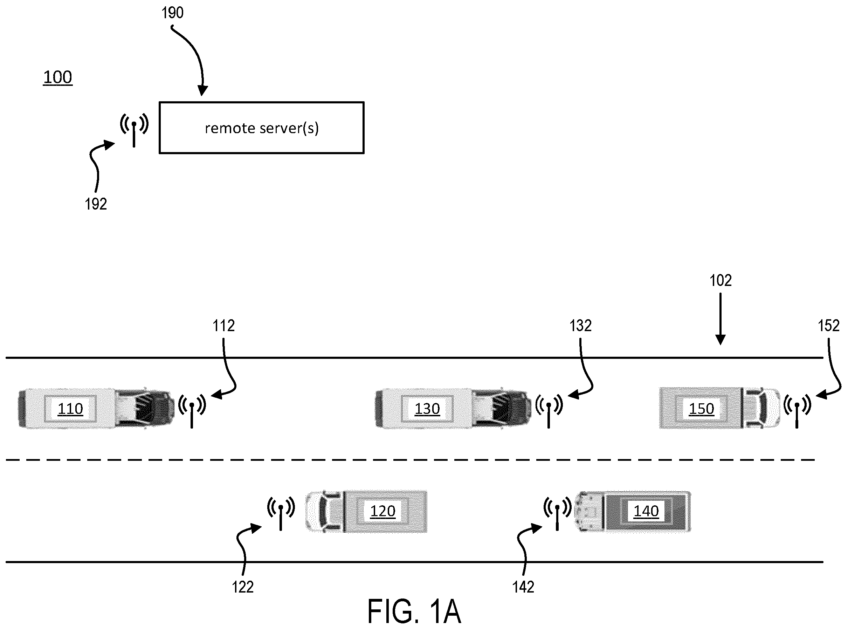

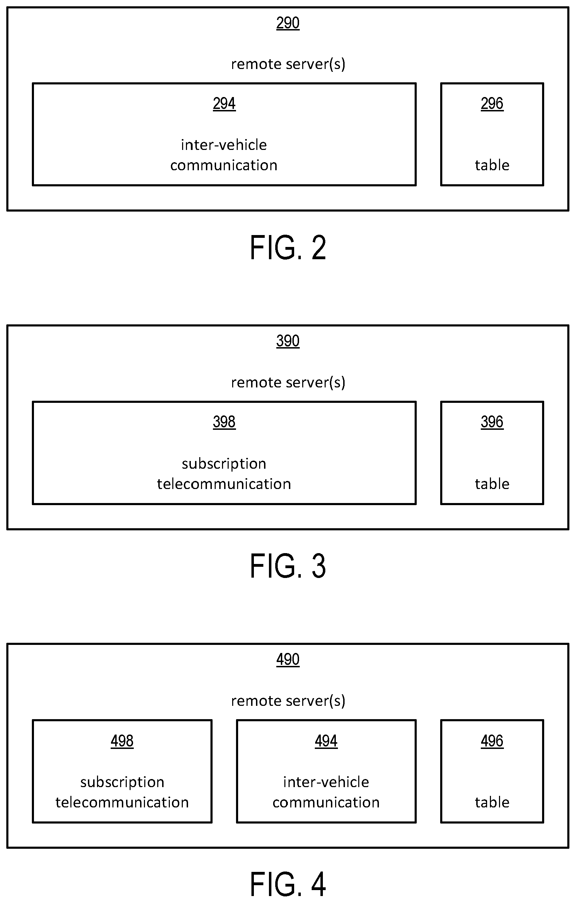

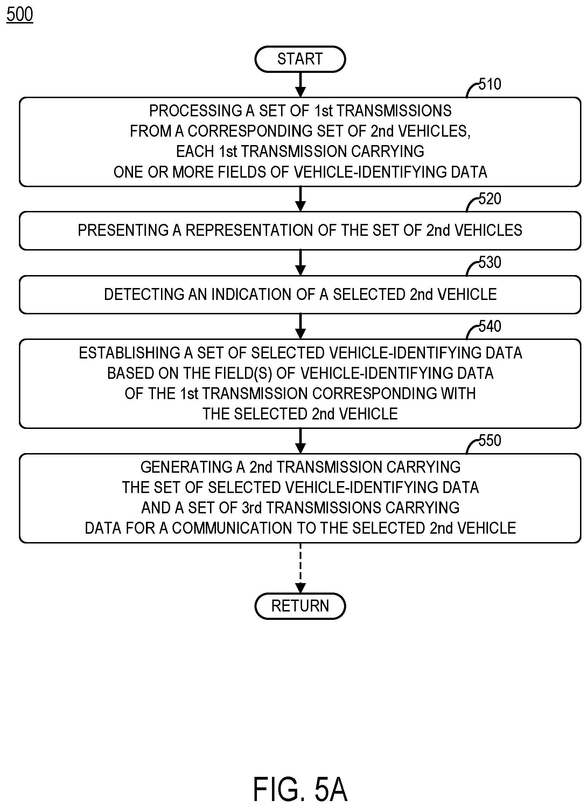

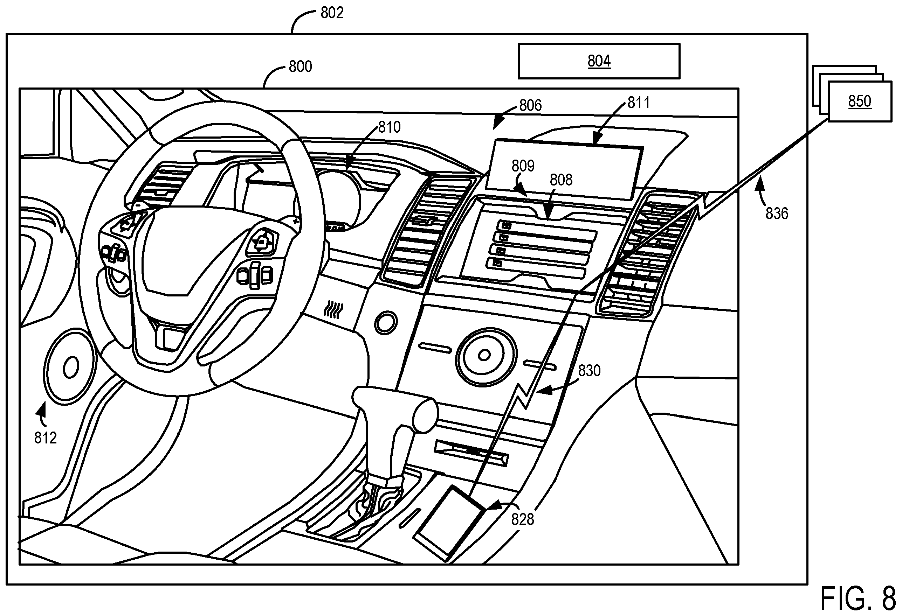

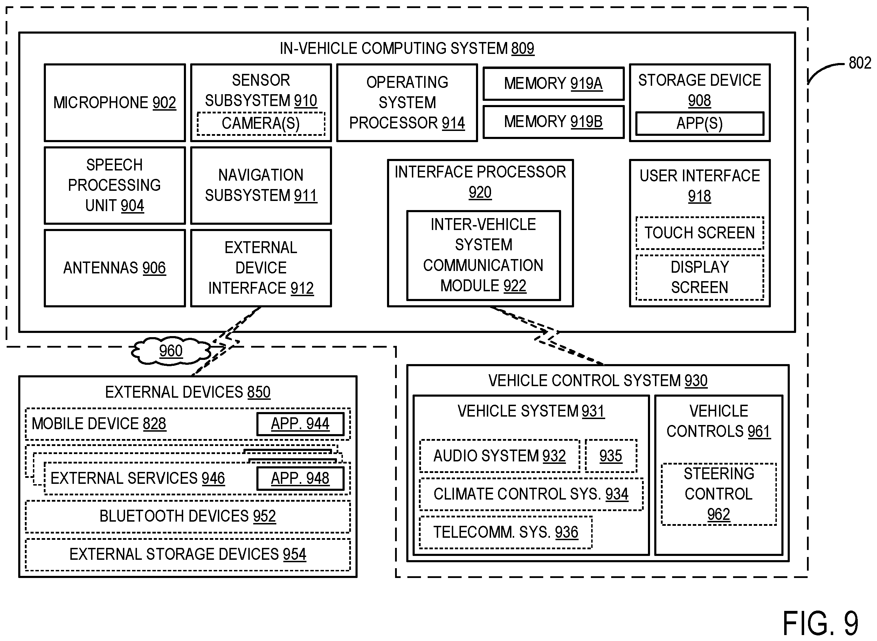

Disclosed herein are systems and methods for identity-based addressing of wireless network communication from a first vehicle driver to a second vehicle driver. In FIGS. 1A through 1F, a scenario is presented in which such systems and methods determine vehicle-identifying data for a number of second vehicles within an environment of a first vehicle, use that vehicle-identifying data to support a selection of one of the second vehicles, provide that selection to one or more remote servers, and provide a communication to the remote servers, which will thereafter be provided to the selected second vehicle. FIGS. 2 through 4 depict block diagrams of some remote servers in various embodiments. FIGS5A and 5B, 6A and 6B, and 7 depict methods for identity-based addressing of wireless network communication from a first vehicle driver to a second vehicle driver, as disclosed herein. FIGS. 8 and 9 show examples of vehicle cabins and in-vehicle computing systems integrating systems as disclosed herein, for performing methods as disclosed herein.

In FIG. 1A, in a scenario 100, various vehicles are travelling proximate to each other in an environment 102. More specifically, environment 102 is a portion of a roadway along which a first vehicle 110, a second vehicle 120, a third vehicle 130, a fourth vehicle 140, and a fifth vehicle 150 are travelling, with first vehicle 110, third vehicle 130, and fifth vehicle 150 travelling in a first direction, and second vehicle 120 and fourth vehicle 140 travelling in a second direction opposite the first (e.g., as opposing traffic).

First vehicle 110, second vehicle 120, third vehicle 130, fourth vehicle 140, and fifth vehicle 150 have corresponding antennae, more e.g., an antenna 112, an antenna 122, an antenna 132, an antenna 142, and an antenna 152. First vehicle 110, second vehicle 120, third vehicle 130, fourth vehicle 140, and fifth vehicle 150 may employ first antenna 112, second antenna 122, third antenna 132, fourth antenna 142, and fifth antenna 152 in support of one or more wireless communication protocols. First vehicle 110, second vehicle 120, third vehicle 130, fourth vehicle 140, and fifth vehicle 150 may be positioned sufficiently proximate to each other that each can receive wireless transmissions that are broadcast by the others.

First vehicle 110, second vehicle 120, third vehicle 130, fourth vehicle 140, and fifth vehicle 150 may generate various transmissions, then send (or transmit) those transmissions through first antenna 112, second antenna 122, third antenna 132, fourth antenna 142, and fifth antenna 152. First vehicle 110, second vehicle 120, third vehicle 130, fourth vehicle 140, and fifth vehicle 150 may also process various transmissions which have been received through first antenna 112, second antenna 122, third antenna 132, fourth antenna 142, and fifth antenna 152.

Some such wireless transmissions may be transmissions in compliance with any of a variety of vehicular communication system protocols. For example, such transmissions may be Vehicle-to-Everything (V2X) transmissions, such as Vehicle-to-Infrastructure (V2I) transmissions and/or Vehicle-to-Vehicle (V2V) transmissions, and may be transmitted in accordance with any of a variety of underlying wireless communication protocols, e.g., Wi-Fi, 3rd Generation Partnership Project (3GPP) protocols or other mobile telecommunication protocols, Bluetooth protocols, and so on, and may accordingly conform to any of a variety of standards. In various embodiments, wireless vehicular transmissions, such as V2X transmissions, may carry various data that may be pertinent to identifying a vehicle, including at least a location or a position. In various embodiments, the data may also include one or more of a time (e.g., as reckoned in Universal Time), one or more vehicle dimensions (e.g., length, width, and/or height), a vehicle type, additional vehicle equipment (e.g., a trailer), and so on.

Such transmissions (including V2X transmissions) may be used for a variety of purposes, such as communicating information about roadway conditions and/or events. Accordingly, each of first vehicle 110, second vehicle 120, third vehicle 130, fourth vehicle 140, and fifth vehicle 150 may broadcast wireless vehicular transmissions periodically while transiting environment 102, e.g., around once every 100 milliseconds (ms). Each of first vehicle 110, second vehicle 120, third vehicle 130, fourth vehicle 140, and fifth vehicle 150 may also receive the wireless vehicular transmissions being broadcast by the others.

In addition, one or more remote servers 190 may be located in or proximate to environment 102, and may have a corresponding antenna 192. Remote servers 190 may also be sufficiently proximate to first vehicle 110, second vehicle 120, third vehicle 130, fourth vehicle 140, and/or fifth vehicle 150 to receive wireless transmissions broadcast by the vehicles, and to send wireless transmissions to the vehicles that the vehicles can receive. Remote servers 190 may process various transmissions which have been received through antenna 192, and remote servers 190 may also generate various transmissions to be sent through antenna 192.

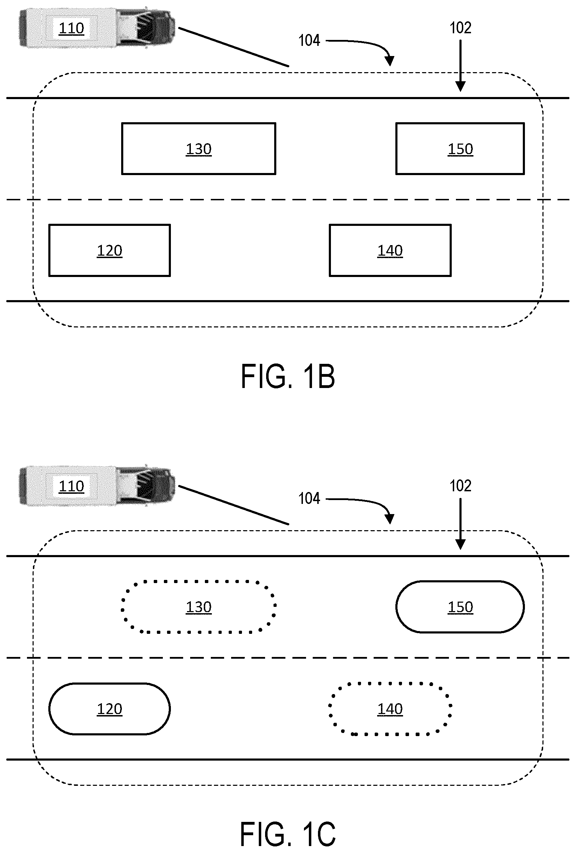

Turning to Fig. 1B, each of second vehicle 120, third vehicle 130, fourth vehicle 140, and fifth vehicle 150 may broadcast wireless vehicular transmissions periodically while transiting environment 102. First vehicle 110 may maintain an internal model of environment 102 based on data carried by those transmissions that may be pertinent to identifying second vehicle 120, third vehicle 130, fourth vehicle 140, and fifth vehicle 150. For example, the vehicle-identifying data may indicate positions corresponding with second vehicle 120, third vehicle 130, fourth vehicle 140, and fifth vehicle 150. That internal model may be amenable to being presented as a visual representation (as discussed further below), such as a visual representation 104 of environment 102. In various embodiments, visual representation 104 may be in the form of a map of a proximal portion of environment 102, or a three-dimensional augmented-reality view of the proximal portion of environment 102, or any other visual representation of the proximal portion of environment 102.

If visual representation 104 is presented to a user of first vehicle 110, such as via a display of first vehicle 110 (e.g., of an in-vehicle computing system of first vehicle 110), the user may be able to correlate positions of various visually-observable vehicles in environment 102 with positions of second vehicle 120, third vehicle 130, fourth vehicle 140, and/or fifth vehicle 150 in visual representation 104. Alternatively, the display (and/or the in-vehicle computing system) of first vehicle 110 may additionally provide representations of various visually-observable vehicles in environment 102 (e.g., as reconstructed through navigation software and/or imaging devices of first vehicle 110), which may be based upon other vehicle-identifying data received from second vehicle 120, third vehicle 130, fourth vehicle 140, and/or fifth vehicle 150 (e.g., vehicle dimensions, vehicle make and model, and so on). Such representations may aid the driver in correlating the various visually-observable vehicles in environment 102 with second vehicle 120, third vehicle 130, fourth vehicle 140, and/or fifth vehicle 150 depicted in visual representation 104.

In various embodiments, visual representation 104 may incorporate other data pertinent to identifying vehicles, such as vehicle lengths, vehicle widths, vehicle heights, vehicle types, whether a trailer is attached to the vehicle, and so on. The depictions of second vehicle 120, third vehicle 130, fourth vehicle 140, and/or fifth vehicle 150 in visual representation 104 may accordingly be made closer to the visually-observable vehicles in environment 102. This may advantageously assist a driver in correlating positions of second vehicle 120, third vehicle 130, fourth vehicle 140, and/or fifth vehicle 150 with the various visually-observable vehicles in environment 102. An application (e.g., of the display and/or in-vehicle computing system) of first vehicle 110 may thus visually display various vehicles in such a way that a user inside first vehicle 110 can easily select a vehicle in environment 102 to communication with.

Turning momentarily to FIG. 1C, in some embodiments, first vehicle 110 (and/or various other vehicles within environment 102) may be covered by a subscription to a telecommunication service to assist in identity-based addressing for wireless network communication. The subscribed telecommunication service may proactively transmit to first vehicle 110 details regarding other vehicles in environment 102 proximate to first vehicle 110 which are also covered by subscriptions to the subscribed telecommunication service. The subscribed telecommunication service may be executed on remote servers 190.

For example, as depicted in FIG. 1C, first vehicle 110, second vehicle 120 and fifth vehicle 150 are all covered by subscriptions to a telecommunication service to assist in identity-based addressing for wireless network communication. The subscribed telecommunication service (e.g., executing on remote servers 190) may transmit data to first vehicle 110 that may be pertinent to identifying vehicles proximate to first vehicle 110 within environment 102. So, regardless of whether second vehicle 120 and/or fifth vehicle 150 have been broadcasting wireless vehicular transmissions carrying data pertinent to their identification, first vehicle 110 may be able to maintain an internal model of environment 102 based at least upon the data carried by transmissions from the subscribed telecommunication service, which may accordingly encompass at least second vehicle 120 and fifth vehicle 150. That internal model may be amenable to presentation as a visual representation, such as in a visual representation 104 of environment 102.

Moreover, in various embodiments, first vehicle 110 may also acquire vehicle-identifying data from vehicles proximate to first vehicle 110 in environment 102 in either of, or both of, the manners discussed above. That is, first vehicle 110 may acquire vehicle-identifying data through wireless vehicular transmissions being broadcast from proximate vehicles, and/or through transmissions from a subscribed telecommunication service executing on remote servers 190.

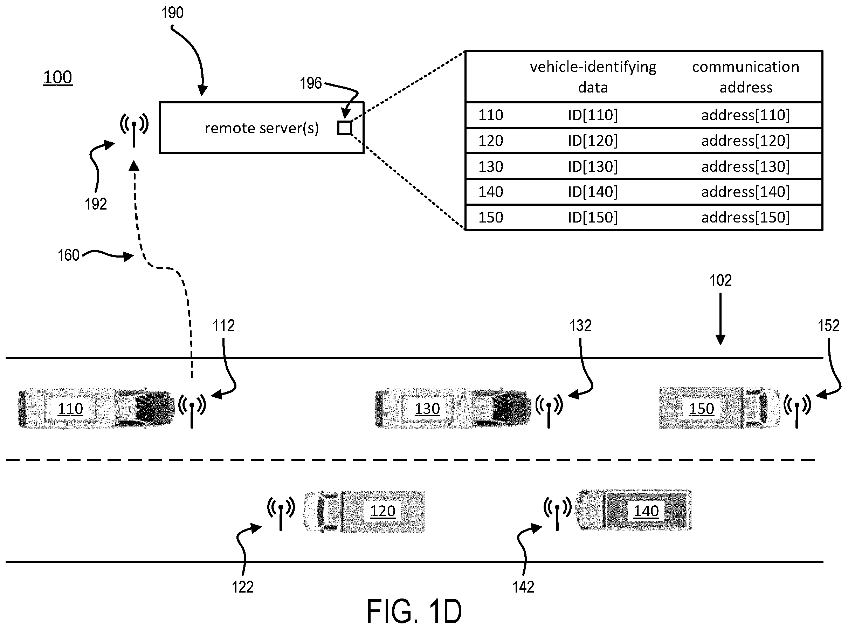

Turning to FIG. 1D, if the driver of first vehicle 110 desires to send a communication to one of the vehicles depicted in visual representation 104, the driver may provide an indication of a selected vehicle out of second vehicle 120, third vehicle 130, fourth vehicle 140, and/or fifth vehicle 150, such as by selecting the representation of that vehicle on a display of an in-vehicle computing system of first vehicle 110. (In various environments, the driver may also indicate the selected vehicle in another manner, such as by use of a pointer-based I/O device, voice commands, and so on.) Whichever vehicle among second vehicle 120, third vehicle 130, fourth vehicle 140, and/or fifth vehicle 150 is selected, first vehicle 110 will have received vehicle-identifying data (e.g., a vehicle position) associated with the selected vehicle. First vehicle 110 may then generate a transmission 160 to remote servers 190 (e.g., to be sent through antenna 112) carrying the vehicle-identifying data for the selected vehicle.

Remote servers 190 may have information regarding vehicle-identifying data that has been broadcast in wireless vehicular transmissions (such as V2X transmissions) by first vehicle 110, second vehicle 120, third vehicle 130, fourth vehicle 140, and/or fifth vehicle 150 in environment 102. In addition, remote servers 190 may also have data relating to communication network addresses by which first vehicle 110, second vehicle 120, third vehicle 130, fourth vehicle 140, and/or fifth vehicle 150 may be addressed in compliance with a protocol of the underlying communication network. Remote servers may maintain a table 196 with a record for each vehicle associated the vehicle with its corresponding vehicle-identifying data (e.g., as received by broadcasted wireless vehicular transmissions), and with its corresponding communication network address. In various embodiments, since each of first vehicle 110, second vehicle 120, third vehicle 130, fourth vehicle 140, and fifth vehicle 150 may be broadcasting wireless vehicular transmissions fairly frequently, e.g., around once every 100 ms, the data in table 196 may be kept current to a substantially similar granularity of time, e.g., to within about 100 ms.

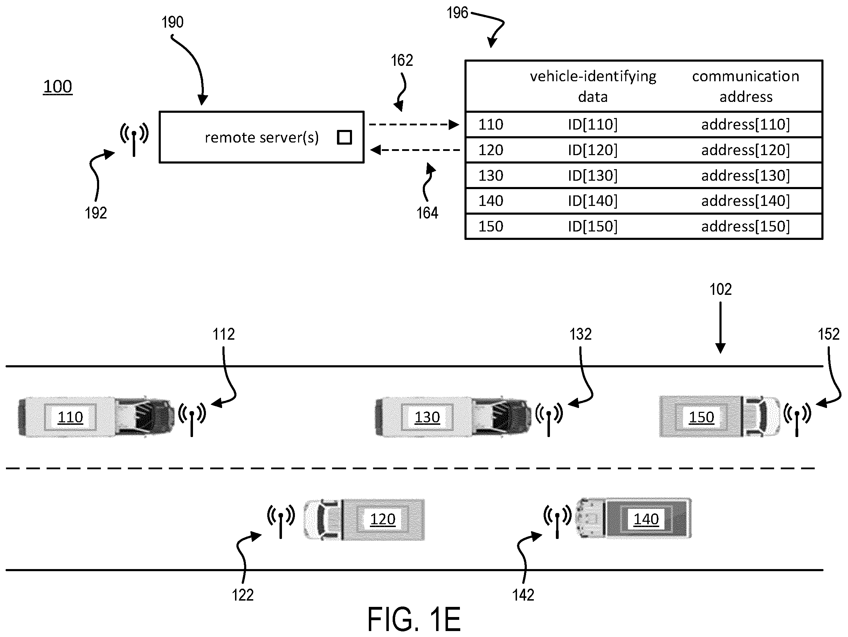

So, turning to FIG. 1E, following the receipt and subsequent processing of transmission 160 from first vehicle 110, remote servers 190 may determine a communication network address for the selected vehicle based upon the vehicle-identifying data carried by transmission 160. For example, remote servers 190 may present a query 162 presenting to table 196 the vehicle-identifying data carried by transmission 160, and may then receive a response 164 from table 196 providing the communication network address. Having identified that communication network address, remote servers 190 may then be prepared to forward a communication from first vehicle 110 to the vehicle selected by the user of first vehicle 110.

In some embodiments, remote servers 190 may generate and send to first vehicle 110 a transmission to indicate that remote servers are prepared to forward a communication to the selected vehicle, which may advantageously forestall transmissions from first vehicle 110 that remote servers 190 are not yet ready to forward. However, in other embodiments, first vehicle 110 might not wait for such a communication.

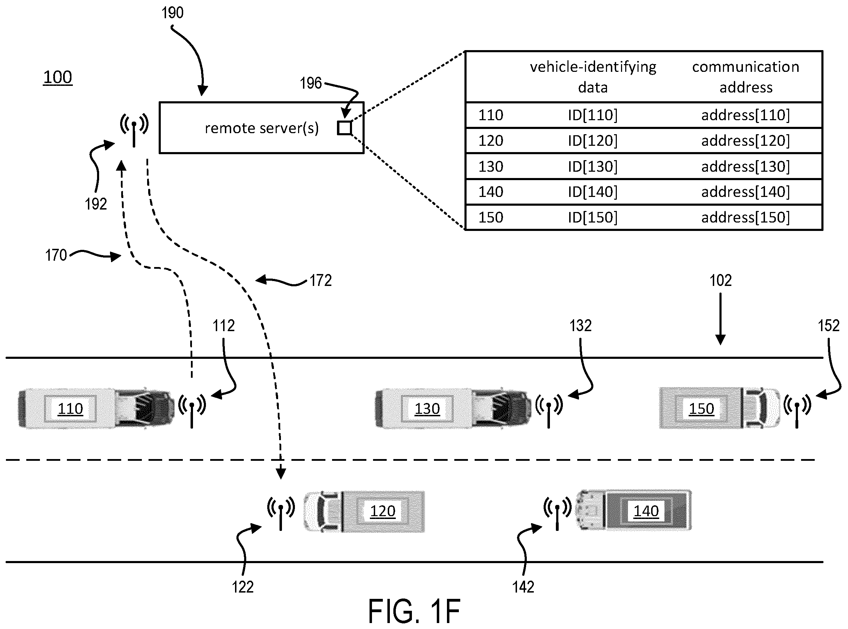

Thus, as depicted in FIG. 1F, after first vehicle 110 has generated and sent transmission 160 to remote servers 190 (e.g., through antenna 112) carrying the vehicle-identifying data for the selected vehicle, first vehicle 110 may generate and send one or more transmissions 170 to remote servers 190 carrying data of a communication to the selected vehicle. The one or more transmissions may be received and processed by remote servers 190, which may then generate one or more transmissions 172 to the selected vehicle. Transmissions 172 may carry a copy of the data of the communication to the selected vehicle carried by transmissions 170.

The data carried by transmissions 170 may pertain to any of a variety of types of communication. In some embodiments, the communication may be a text message. For some embodiments, the communication may be an electronic mail (e-mail) message. In various embodiments, the communication may be an audio communication, a video communication, or any other type of communication.

So, for example, a user of first vehicle 110 may indicate a desire to communicate to a user of second vehicle 120 by selecting a representation of second vehicle 120 in visual representation 104 of environment 102, e.g., by touching a display of an in-vehicle computing system of first vehicle 110. First vehicle 110 may then generate transmission 160 to carry vehicle-identifying data corresponding with second vehicle 120, and may send transmission 160 through antenna 112. Remote sensors may then receive transmission 160 through antenna 192, and may process transmission 160, thereby recovering the vehicle-identifying data corresponding with second vehicle 120.

Remote servers 190 may present the vehicle-identifying data corresponding with second vehicle 120, in query 162, to table 196, which may then return the communication network address corresponding to second vehicle 120 to remote servers 190. Subsequently, first vehicle 110 may generate transmission 170 carrying data of a communication to second vehicle 120, and remote servers 190 may generate transmissions 172, carrying a copy of the data of the communication, to second vehicle 120.

In various embodiments, following receipt of transmission 160 and/or transmission 170, remote servers 190 may also query table 196 to identify a communication network address of first vehicle 110. At that point, remote servers 190 may be prepared to forward one or more communications from first vehicle 110 to second vehicle 120, and may also be prepared to forward one or more communications from second vehicle 120 to first vehicle 110, thereby advantageously enabling two-way communication between first vehicle 110 and second vehicle 120, even though neither vehicle has earlier knowledge of how to address the other vehicle within the communications network. The communication in either direction, or both directions, may be based on an IP packet based wireless communication protocol, or a 3GPP cellular based wireless communication protocol, or any other wireless communications protocol.

Moreover, as vehicles transit a roadway in environment 102, they may be assigned new network communication addresses (e.g., new IP addresses). Remote servers 190 may track changes in IP addresses and may seamlessly maintain the routing of communication from first vehicle 110 to second vehicle 120 and/or from second vehicle 120 to first vehicle 110. The IP assignment within the system may be random (or pseudo-random), and may therefore not be predictable, thus advantageously supporting added integrity to the communications link.

FIG. 2 shows a block diagram of one or more remote servers 290, which may operate one or more inter-vehicle communication services 294, and may also maintain a table 296 of vehicle-identifying data and network communication addresses corresponding with various vehicles. (Remote servers 290 may be substantially similar to remote servers 190, and table 296 may be substantially similar to table 196.)

Remote servers 290 may process transmissions received through one or more antennas of remote servers 290 (which may be substantially similar to antenna 192). Inter-vehicle communication services 294 may process a transmission from a first vehicle that carries vehicle-identifying data (e.g., to extract the vehicle-identifying data), and may formulate a query to table 296 using the vehicle-identifying data in order to determine a network communication addresses corresponding with the vehicle-identifying data, e.g., corresponding with a second vehicle identified by the data. Inter-vehicle communication services 294 may then process subsequent transmissions from the first vehicle which carry a communication from the first vehicle to the second vehicle, and may generate transmissions to be sent to the second vehicle which carry the communication.

Accordingly, inter-vehicle communication services 294 may advantageously facilitate inter-vehicle communication in which the vehicles obtain vehicle-identifying data from transmissions being broadcast by other proximate vehicles in the environment.

FIG. 3 shows a block diagram of one or more remote servers 390, which may operate a subscription telecommunication service 398, and may also maintain a table 396 of vehicle-identifying data and network communication addresses corresponding with various vehicles. (Remote servers 390 may be substantially similar to remote servers 190, and table 396 may be substantially similar to table 196.)

Subscription telecommunication service 398 may proactively generate transmissions to various vehicles covered by subscriptions to a telecommunication service. The transmissions may provide vehicle-identifying data pertaining to other proximate vehicles in environment 102 which are also covered by subscriptions to the telecommunication service.

Subscription telecommunication service 398 may additionally function similarly to inter-vehicle communication services 294 as discussed above, e.g., processing a transmission from a first vehicle that carries vehicle-identifying data, querying table 296 using the vehicle-identifying data to determine a network communication addresses corresponding with a second vehicle identified by the vehicle-identifying data, processing subsequent transmissions received from the first vehicle carrying a communication from the first vehicle to the second vehicle, and generating transmissions to be sent to the second vehicle which carry the communication.

Accordingly, in comparison with inter-vehicle communication services 294, subscription telecommunication service 398 may advantageously facilitate inter-vehicle communication in which the vehicles need not obtain vehicle-identifying data from transmissions being broadcast by other proximate vehicles in the environment, but instead obtain vehicle-identifying data from the subscription service itself.

In some embodiments, subscription telecommunication service 398 may support the use of names that users may maintain in any of a variety of third party apps (e.g., "handles") as a type of vehicle-identifying data, and queries to table 296 may provide such names to determine a network communication address associated with a name (or handle).

FIG. 4 shows a block diagram of one or more remote servers 490 which may maintain a table 496 of vehicle-identifying data and network communication addresses corresponding with various vehicles. (Remote servers 490 may be substantially similar to remote servers 190, and table 496 may be substantially similar to table 196.) In comparison with remote servers 290 and remote servers 390, remote servers 490 may operate one or more inter-vehicle communication services 494 (which may be substantially similar to inter-vehicle communication services 294, as discussed above), and may also operate a subscription telecommunication service 498 (which may be substantially similar to subscription telecommunication service 398).

Since remote servers 490 operate both inter-vehicle communication services 494 and subscription telecommunication service 498, remote servers 490 may advantageously facilitate inter-vehicle communication in which vehicle-identifying data is obtained from transmissions being broadcast by other proximate vehicles in the environment, and may also advantageously facilitate inter-vehicle communication in which vehicle-identifying data is obtained from subscriptions to a telecommunication service.

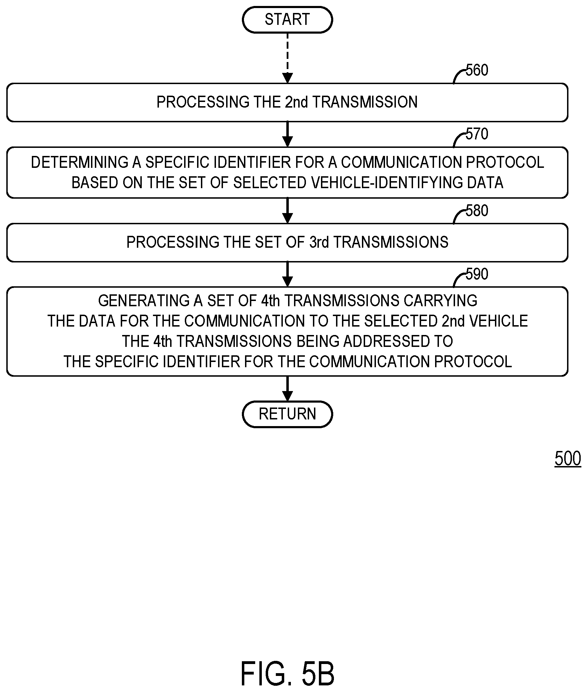

FIGS. 5A and 5B, 6A and 6B, and 7 show methods of using identity-based addressing for wireless network communication. FIGS. 5A and 5B depict portions of a method 500, which comprises a processing 510, a presenting 520, a detecting 530, an establishing 540, and a generating 550. In various embodiments, method 500 may also comprise a processing 560, a determining 570, a processing 580, and/or a generating 590.

In processing 510, a set of first transmissions may be processed by a first vehicle, the set of first transmissions being from a corresponding set of second vehicles. Each first transmission of the set of first transmissions may carry one or more fields of vehicle-identifying data. In presenting 520, a representation of the set of second vehicles may be presented via a user interface of the first vehicle. In detecting 530, an indication of a selected second vehicle of the set of second vehicles may be detected via the user interface of the first vehicle. In establishing 540, a set of selected vehicle-identifying data may be established by the first vehicle. The set of selected vehicle-identifying data may be based on the one or more fields of vehicle-identifying data of the first transmission of the set of first transmissions corresponding with the selected second vehicle. In generating 550, a second transmission may be generated by the first vehicle, the second transmission carrying the set of selected vehicle-identifying data. In generating 550, a set of third transmissions may also be generated by the first vehicle, the set of third transmissions carrying data for a communication to the selected second vehicle.

In some embodiments, the first vehicle and the set of second vehicles may participate in a subscription telecommunication service for identifying other vehicles that participate in the subscription telecommunication service. For some embodiments, the set of selected vehicle-identifying data may include a position of the selected second vehicle. In some such embodiments, the position may be a GNSS position, such as a GPS position.

For some embodiments, the set of first transmissions may include V2X transmissions. In some embodiments, the communication to the selected second vehicle may include a text message, an e-mail message, an audio communication, and/or a video communication. For some embodiments, the user interface may include a visual representation of a proximal portion of an environment around the first vehicle. In some such embodiments, the visual representation may include a map and/or a three-dimensional graphical representation.

In various embodiments, in processing 560, the second transmission may be processed by a server remote from the first vehicle. In determining 570, a communication network address for a communication protocol may be determined, by the server remote from the first vehicle, based on the set of selected vehicle-identifying data. For some embodiments, the communication network address for the communication protocol may be an IP address. In some embodiments, the server remote from the first vehicle may maintain, for each second vehicle of the set of second vehicles, a record of corresponding sets of selected vehicle-identifying data and corresponding communication network addresses for the communication protocol.

Moreover, in some such embodiments, in processing 580, the set of third transmissions may be processed by the server remote from the first vehicle. In generating 590, a set of fourth transmissions carrying the data for the communication to the selected second vehicle may be generated by the server remote from the first vehicle, the fourth transmissions being addressed to the communication network address for the communication protocol.

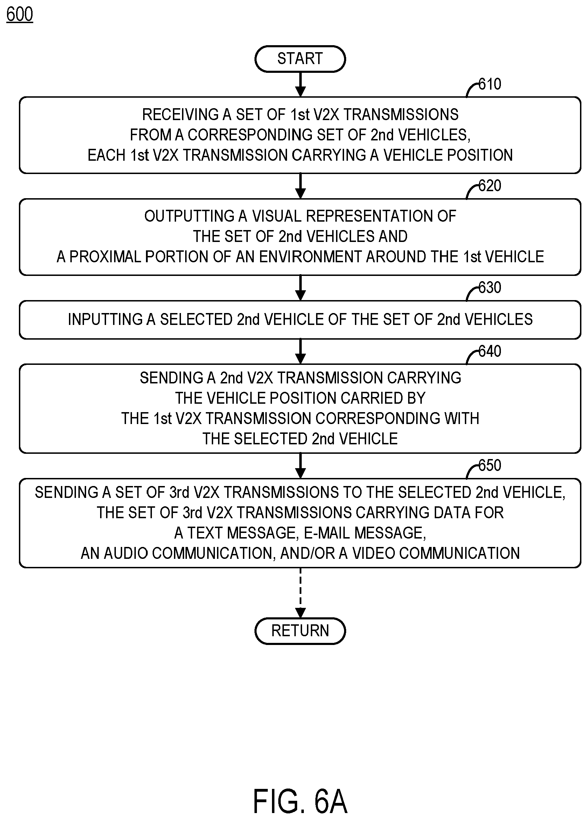

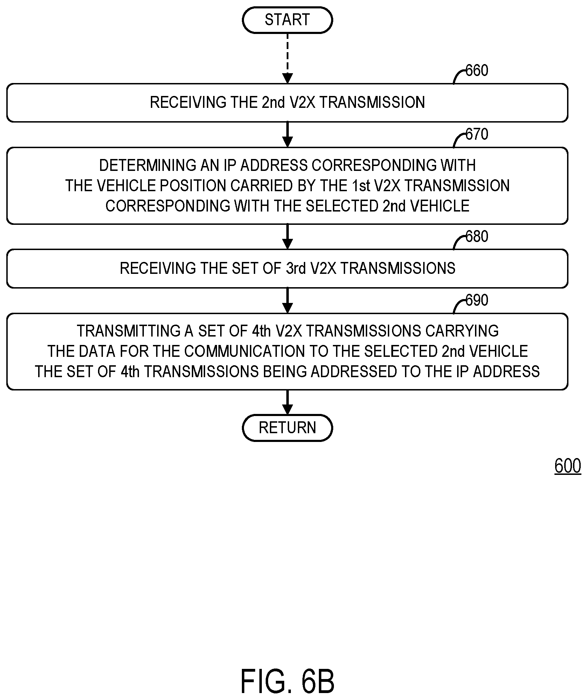

FIGS. 6A and 6B depict portions of a method 600, which comprises a receiving 610, an outputting 620, an inputting 630, a sending 640, and a sending 650. In various embodiments, method 600 may also comprise a receiving 660, a determining 670, a receiving 680, and/or a transmitting 690.

In receiving 610, a set of first V2X transmissions may be received by a first vehicle from a corresponding set of second vehicles, each first V2X transmission of the set of first V2X transmissions carrying a vehicle position. In outputting 620, a visual representation of the set of second vehicles and a proximal portion of an environment around the first vehicle may be outputted via an in-vehicle computing system of the first vehicle. In inputting 630, a selected second vehicle of the set of second vehicles may be inputted via the in-vehicle computing system of the first vehicle. In sending 640, a second V2X transmission may be sent by the first vehicle. The second V2X transmission may carry the vehicle position carried by the first V2X transmission corresponding with the selected second vehicle. In sending 650, a set of third V2X transmissions to the selected second vehicle may be sent by the first vehicle. The set of third V2X transmissions may carry data for a communication which may include a text message, an e-mail message, an audio communication, and/or a video communication.

In some embodiments, the first vehicle and the set of second vehicles may participate in a subscription telecommunication service for identifying other vehicles that participate in the subscription telecommunication service. For some embodiments, the vehicle positions carried by the first V2X transmissions may be GNSS positions. In some embodiments, the visual representation may include at least one of a map and a three-dimensional graphical representation.

In various embodiments, in receiving 660, the second V2X transmission may be received by a server remote from the first vehicle. In determining 670, an IP address may be determined by the server remote from the first vehicle, the IP address corresponding with the vehicle position carried by the first V2X transmission corresponding with the selected second vehicle. In receiving 680, the set of third V2X transmissions may be received by the server remote from the first vehicle. In transmitting 690, a set of fourth V2X transmissions carrying the data for the communication to the selected second vehicle may be transmitted by the server remote from the first vehicle, the set of fourth transmissions being addressed to the IP address.

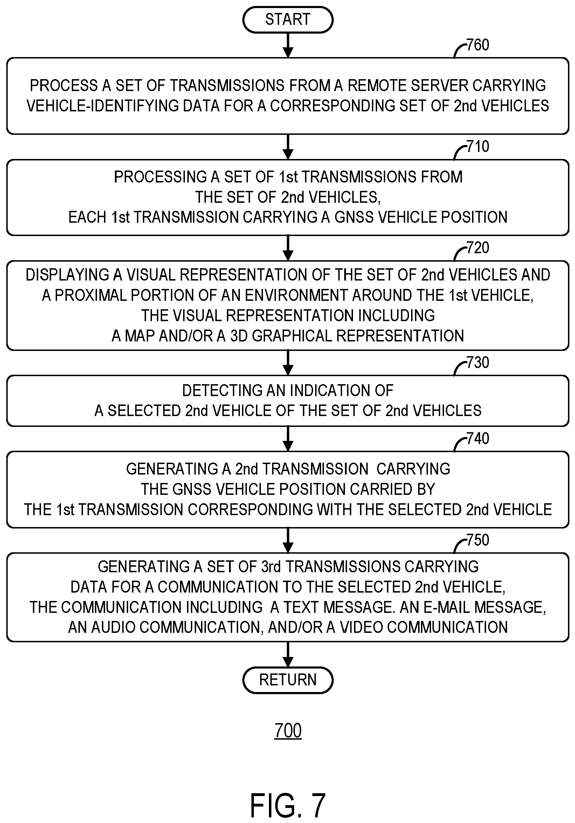

FIG. 7 depicts a method 700, which comprises a processing 710, a displaying 720, a detecting 730, a generating 740, and a generating 750. In various embodiments, method 700 may also comprise a processing 760.

In processing 710, a set of first transmissions may be processed. The set of first transmissions may be received through an antenna at a first vehicle from a corresponding set of second vehicles, each first transmission of the set of first transmissions carrying a GNSS vehicle position. In displaying 720, a visual representation of the set of second vehicles and a proximal portion of an environment around the first vehicle may be displayed via the user interface. The visual representation may include a map and/or a three-dimensional graphical representation. In detecting 730, an indication of a selected second vehicle of the set of second vehicles may be detected via the user interface. In generating 740, a second transmission may be generated, to be sent through the antenna. The second transmission may carry the GNSS vehicle position carried by the first transmission corresponding with the selected second vehicle. In generating 750, a set of third transmissions may be generated, to be sent through the antenna. The set of third transmissions may carry data for a communication to the selected second vehicle, the communication including a text message, an e-mail message, an audio communication, and/or a video communication.

In some embodiments, the first vehicle may participate in a subscription telecommunication service for identifying other vehicles that participate in the subscription telecommunication service. For some embodiments, the second vehicles of the set of second vehicles may participate in a subscription telecommunication service for identifying other vehicles that participate in the subscription telecommunication service. In some such embodiments, in processing 760, another set of transmissions, received through the antenna, may be processed, which carry vehicle-identifying data for the second vehicles of the set of second vehicles.

Method 500, method 600, and/or method 700 disclosed herein, and/or parts thereof, may be carried out by one or more processors executing executable instructions stored on a non-transitory memory. In various embodiments, such processors, non-transitory memories, and executable instructions operable to carry out these methods (and/or parts thereof) are in the vehicles and servers as disclosed herein.

FIG. 8 shows an example partial view of an interior of a cabin 800 of a vehicle 802, in which a driver and/or one or more passengers may be seated. Vehicle 802 of FIG. 8 may be a motor vehicle including drive wheels (not shown) and an internal combustion engine 804. Internal combustion engine 804 may include one or more combustion chambers which may receive intake air via an intake passage and exhaust combustion gases via an exhaust passage. Vehicle 802 may be a road automobile, among other types of vehicles. In some examples, vehicle 802 may include a hybrid propulsion system including an energy conversion device operable to absorb energy from vehicle motion and/or the engine and convert the absorbed energy to an energy form suitable for storage by an energy storage device. Vehicle 802 may include a fully electric vehicle, incorporating fuel cells, solar energy capturing elements, and/or other energy storage systems for powering the vehicle.

As shown, an instrument panel 806 may include various displays and controls accessible to a human driver (also referred to as the user) of vehicle 802. For example, instrument panel 806 may include a touch screen 808 of an in-vehicle computing system or infotainment system 809 (e.g., an infotainment system), an audio system control panel, and an instrument cluster 810. Touch screen 808 may receive user input to in-vehicle computing system or infotainment system 809 for controlling audio output, visual display output, user preferences, control parameter selection, and so on. While the example system shown in FIG. 8 includes audio system controls that may be performed via a user interface of in-vehicle computing system or infotainment system 809, such as touch screen 808 without a separate audio system control panel, in other embodiments, the vehicle may include an audio system control panel, which may include controls for a conventional vehicle audio system such as a radio, compact disc player, MP3 player, and so on. The audio system controls may include features for controlling one or more aspects of audio output via one or more speakers 812 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system or infotainment system 809 may adjust a radio station selection, a playlist selection, a source of audio input (e.g., from radio or CD or MP3), and so on, based on user input received directly via touch screen 808, or based on data regarding the user (such as a physical state and/or environment of the user) received via one or more external devices 850 and/or a mobile device 828. The audio system of the vehicle may include an amplifier (not shown) coupled to plurality of loudspeakers (not shown). In some embodiments, one or more hardware elements of in-vehicle computing system or infotainment system 809, such as touch screen 808, a display screen 811, various control dials, knobs and buttons, memory, processor(s), and any interface elements (e.g., connectors or ports) may form an integrated head unit that is installed in instrument panel 806 of the vehicle. The head unit may be fixedly or removably attached in instrument panel 806. In additional or alternative embodiments, one or more hardware elements of in-vehicle computing system or infotainment system 809 may be modular and may be installed in multiple locations of the vehicle.

Cabin 800 may include one or more sensors for monitoring the vehicle, the user, and/or the environment. For example, cabin 800 may include one or more seat-mounted pressure sensors configured to measure the pressure applied to the seat to determine the presence of a user, door sensors configured to monitor door activity, humidity sensors to measure the humidity content of the cabin, microphones to receive user input in the form of voice commands, to enable a user to conduct telephone calls, and/or to measure ambient noise in cabin 800, and so on. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, and so on. Information regarding ambient conditions of the vehicle, vehicle status, or vehicle driver may also be received from sensors external to/separate from the vehicle (that is, not part of the vehicle system), such as sensors coupled to external devices 850 and/or mobile device 828.

Cabin 800 may also include one or more user objects, such as mobile device 828, that are stored in the vehicle before, during, and/or after travelling. Mobile device 828 may include a smart phone, a tablet, a laptop computer, a portable media player, and/or any suitable mobile computing device. Mobile device 828 may be connected to in-vehicle computing system via a communication link 830. Communication link 830 may be wired (e.g., via Universal Serial Bus (USB), Mobile High-Definition Link (MHL), High-Definition Multimedia Interface (HDMI), Ethernet, and so on) or wireless (e.g., via Bluetooth^{®}, Wi-Fi^{®}, Wi-Fi Direct^{®}, Near-Field Communication (NFC), cellular connectivity, and so on) and configured to provide two-way communication between the mobile device and the in-vehicle computing system. (Wi-Fi Direct^{®} is a registered trademark of Wi-Fi Alliance, Austin, Texas.) Mobile device 828 may include one or more wireless communication interfaces for connecting to one or more communication links (e.g., one or more of the example communication links described above). The wireless communication interface may include one or more physical devices, such as antenna(s) or port(s) coupled to data lines for carrying transmitted or received data, as well as one or more modules/drivers for operating the physical devices in accordance with other devices in the mobile device. For example, communication link 830 may provide sensor and/or control signals from various vehicle systems (such as vehicle audio system, climate control system, and so on) and touch screen 808 to mobile device 828 and may provide control and/or display signals from mobile device 828 to the in-vehicle systems and touch screen 808. Communication link 830 may also provide power to mobile device 828 from an in-vehicle power source in order to charge an internal battery of the mobile device.

In-vehicle computing system or infotainment system 809 may also be communicatively coupled to additional devices operated and/or accessed by the user but located external to vehicle 802, such as one or more external devices 850. In the depicted embodiment, external devices are located outside of vehicle 802 though it will be appreciated that in alternate embodiments, external devices may be located inside cabin 800. The external devices may include a server computing system, personal computing system, portable electronic device, electronic wrist band, electronic head band, portable music player, electronic activity tracking device, pedometer, smart-watch, GPS system, and so on. External devices 850 may be connected to the in-vehicle computing system via a communication link 836 which may be wired or wireless, as discussed with reference to communication link 830, and configured to provide two-way communication between the external devices and the in-vehicle computing system. For example, external devices 850 may include one or more sensors and communication link 836 may transmit sensor output from external devices 850 to in-vehicle computing system or infotainment system 809 and touch screen 808. External devices 850 may also store and/or receive information regarding contextual data, user behavior/preferences, operating rules, and so on and may transmit such information from external devices 850 to in-vehicle computing system or infotainment system 809 and touch screen 808.

In-vehicle computing system or infotainment system 809 may analyze the input received from external devices 850, mobile device 828, and/or other input sources and select settings for various in-vehicle systems (such as climate control system or audio system), provide output via touch screen 808 and/or speakers 812, communicate with mobile device 828 and/or external devices 850, and/or perform other actions based on the assessment. In some embodiments, all or a portion of the assessment may be performed by mobile device 828 and/or external devices 850.

In some embodiments, one or more of external devices 850 may be communicatively coupled to in-vehicle computing system or infotainment system 809 indirectly, via mobile device 828 and/or another of external devices 850. For example, communication link 836 may communicatively couple external devices 850 to mobile device 828 such that output from external devices 850 is relayed to mobile device 828. Data received from external devices 850 may then be aggregated at mobile device 828 with data collected by mobile device 828, the aggregated data then transmitted to in-vehicle computing system or infotainment system 809 and touch screen 808 via communication link 830. Similar data aggregation may occur at a server system and then transmitted to in-vehicle computing system or infotainment system 809 and touch screen 808 via communication link 836 and/or communication link 830.

FIG. 9 shows a block diagram of an in-vehicle computing system or infotainment system 809 configured and/or integrated inside vehicle 802. In-vehicle computing system or infotainment system 809 may perform one or more of the methods described herein in some embodiments. In some examples, in-vehicle computing system or infotainment system 809 may be a vehicle infotainment system configured to provide information-based media content (audio and/or visual media content, including entertainment content, navigational services, and so on) to a vehicle user to enhance the operator's in-vehicle experience. In-vehicle computing system or infotainment system 809 may include, or be coupled to, various vehicle systems, sub-systems, hardware components, as well as software applications and systems that are integrated in, or integratable into, vehicle 802 in order to enhance an in-vehicle experience for a driver and/or a passenger.

In-vehicle computing system or infotainment system 809 may include one or more processors including an operating system processor 914 and an interface processor 920. Operating system processor 914 may execute an operating system on in-vehicle computing system or infotainment system 809, and control input/output, display, playback, and other operations of In-vehicle computing system or infotainment system 809. Interface processor 920 may interface with a vehicle control system 930 via an inter-vehicle system communication module 922.

Inter-vehicle system communication module 922 may output data to one or more other vehicle systems 931 and/or one or more other vehicle control elements 961, while also receiving data input from other vehicle systems 931 and other vehicle control elements 961, e.g., by way of vehicle control system 930. When outputting data, inter-vehicle system communication module 922 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System (GPS) sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle). For example, in-vehicle computing system or infotainment system 809 may retrieve from the engine CAN bus the current speed of the vehicle estimated by the wheel sensors, a power state of the vehicle via a battery and/or power distribution system of the vehicle, an ignition state of the vehicle, and so on. In addition, other interfacing means such as Ethernet may be used as well without departing from the scope of this disclosure.

A storage device 908 may be included in in-vehicle computing system or infotainment system 809 to store data such as instructions executable by operating system processor 914 and/or interface processor 920 in non-volatile form. Storage device 908 may store application data, including prerecorded sounds, to enable in-vehicle computing system or infotainment system 809 to run an application for connecting to a cloud-based server and/or collecting information for transmission to the cloud-based server. The application may retrieve information gathered by vehicle systems/sensors, input devices (e.g., a user interface 918), data stored in one or more storage devices, such as a volatile memory 919A or a non-volatile memory 919B, devices in communication with the in-vehicle computing system (e.g., a mobile device connected via a Bluetooth^{®} link), and so on. In-vehicle computing system or infotainment system 809 may further include a volatile memory 919A, which may be random access memory (RAM). Non-transitory storage devices, such as non-volatile storage device 908 and/or non-volatile memory 919B, may store instructions and/or code that, when executed by a processor (e.g., operating system processor 914 and/or interface processor 920), controls in-vehicle computing system or infotainment system 809 to perform one or more of the actions described in the disclosure.

A microphone 902 may be included in in-vehicle computing system or infotainment system 809 to receive voice commands from a user, to measure ambient noise in the vehicle, to determine whether audio from speakers of the vehicle is tuned in accordance with an acoustic environment of the vehicle, and so on. A speech processing unit 904 may process voice commands, such as the voice commands received from microphone 902. In some embodiments, in-vehicle computing system or infotainment system 809 may also be able to receive voice commands and sample ambient vehicle noise using a microphone included in an audio system 932 of the vehicle.

One or more additional sensors may be included in a sensor subsystem 910 of in-vehicle computing system or infotainment system 809. For example, sensor subsystem 910 may include a camera, such as a rear view camera for assisting a user in parking the vehicle and/or a cabin camera for identifying a user (e.g., using facial recognition and/or user gestures). Sensor subsystem 910 of in-vehicle computing system or infotainment system 809 may communicate with and receive inputs from various vehicle sensors and may further receive user inputs. For example, the inputs received by sensor subsystem 910 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 910 alone, other sensors may communicate with both sensor subsystem 910 and vehicle control system 930, or may communicate with sensor subsystem 910 indirectly via vehicle control system 930. A navigation subsystem 911 of in-vehicle computing system or infotainment system 809 may generate and/or receive navigation information such as location information (e.g., via a GPS sensor and/or other sensors from sensor subsystem 910), route guidance, traffic information, point-of-interest (POI) identification, and/or provide other navigational services for the driver.

An external device interface 912 of in-vehicle computing system or infotainment system 809 may be coupleable to and/or communicate with one or more external devices 850 located external to vehicle 802. While the external devices are illustrated as being located external to vehicle 802, it is to be understood that they may be temporarily housed in vehicle 802, such as when the user is operating the external devices while operating vehicle 802. In other words, external devices 850 are not integral to vehicle 802. External devices 850 may include a mobile device 828 (e.g., connected via a Bluetooth^{®}, NFC, WI-FI Direct^{®}, or other wireless connection) or an alternate Bluetooth^{®}-enabled device 952. (Wi-Fi Direct^{®} is a registered trademark of Wi-Fi Alliance, Austin, Texas.)

Mobile device 828 may be a mobile phone, smart phone, wearable devices/sensors that may communicate with the in-vehicle computing system via wired and/or wireless communication, or other portable electronic device(s). Other external devices include one or more external services 946. For example, the external devices may include extra-vehicular devices that are separate from and located externally to the vehicle. Still other external devices include one or more external storage devices 954, such as solid-state drives, pen drives, Universal Serial Bus (USB) drives, and so on. External devices 850 may communicate with in-vehicle computing system or infotainment system 809 either wirelessly or via connectors without departing from the scope of this disclosure. For example, external devices 850 may communicate with in-vehicle computing system or infotainment system 809 through external device interface 912 over a network 960, a USB connection, a direct wired connection, a direct wireless connection, and/or other communication link.

External device interface 912 may provide a communication interface to enable the in-vehicle computing system to communicate with mobile devices associated with contacts of the driver. For example, external device interface 912 may enable phone calls to be established and/or text messages (e.g., Short Message Service (SMS), Multimedia Message Service (MMS), and so on) to be sent (e.g., via a cellular communications network) to a mobile device associated with a contact of the driver. External device interface 912 may additionally or alternatively provide a wireless communication interface to enable the in-vehicle computing system to synchronize data with one or more devices in the vehicle (e.g., the driver's mobile device) via Wi-Fi Direct^{®}, as described in more detail below.

One or more applications 944 may be operable on mobile device 828. As an example, a mobile device application 944 may be operated to aggregate user data regarding interactions of the user with the mobile device. For example, mobile device application 944 may aggregate data regarding music playlists listened to by the user on the mobile device, telephone call logs (including a frequency and duration of telephone calls accepted by the user), positional information including locations frequented by the user and an amount of time spent at each location, and so on. The collected data may be transferred by application 944 to External device interface 912 over network 960. In addition, specific user data requests may be received at mobile device 828 from in-vehicle computing system or infotainment system 809 via external device interface 912. The specific data requests may include requests for determining where the user is geographically located, an ambient noise level and/or music genre at the user's location, an ambient weather condition (temperature, humidity, and so on) at the user's location, and so on. Mobile device application 944 may send control instructions to components (e.g., microphone, amplifier, and so on) or other applications (e.g., navigational applications) of mobile device 828 to enable the requested data to be collected on the mobile device or requested adjustment made to the components. Mobile device application 944 may then relay the collected information back to in-vehicle computing system or infotainment system 809.

Likewise, one or more applications 948 may be operable on external services 946. As an example, external services applications 948 may be operated to aggregate and/or analyze data from multiple data sources. For example, external services applications 948 may aggregate data from one or more social media accounts of the user, data from the in-vehicle computing system (e.g., sensor data, log files, user input, and so on), data from an internet query (e.g., weather data, POI data), and so on. The collected data may be transmitted to another device and/or analyzed by the application to determine a context of the driver, vehicle, and environment and perform an action based on the context (e.g., requesting/sending data to other devices).

Vehicle control system 930 may include controls for controlling aspects of various vehicle systems 931 involved in different in-vehicle functions. These may include, for example, controlling aspects of vehicle audio system 932 for providing audio entertainment to the vehicle occupants, aspects of a climate control system 934 for meeting the cabin cooling or heating needs of the vehicle occupants, as well as aspects of a telecommunication system 936 for enabling vehicle occupants to establish telecommunication linkage with others.

Audio system 932 may include one or more acoustic reproduction devices including electromagnetic transducers such as one or more speakers 935. Vehicle audio system 932 may be passive or active such as by including a power amplifier. In some examples, in-vehicle computing system or infotainment system 809 may be a sole audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 934 may be configured to provide a comfortable environment within the cabin or passenger compartment of vehicle 802. Climate control system 934 includes components enabling controlled ventilation such as air vents, a heater, an air conditioner, an integrated heater and air-conditioner system, and so on. Other components linked to the heating and air-conditioning setup may include a windshield defrosting and defogging system capable of clearing the windshield and a ventilation-air filter for cleaning outside air that enters the passenger compartment through a fresh-air inlet.

Vehicle control system 930 may also include controls for adjusting the settings of various vehicle control elements 961 (or vehicle controls, or vehicle system control elements) related to the engine and/or auxiliary elements within a cabin of the vehicle, such as one or more steering wheel controls 962 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 961 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system. The control signals may also control audio output at one or more speakers 935 of vehicle audio system 932. For example, the control signals may adjust audio output characteristics such as volume, equalization, audio image (e.g., the configuration of the audio signals to produce audio output that appears to a user to originate from one or more defined locations), audio distribution among a plurality of speakers, and so on. Likewise, the control signals may control vents, air conditioner, and/or heater of climate control system 934. For example, the control signals may increase delivery of cooled air to a specific section of the cabin.

Control elements positioned on an outside of a vehicle (e.g., controls for a security system) may also be connected to in-vehicle computing system or infotainment system 809, such as via inter-vehicle system communication module 922. The control elements of vehicle control system 930 may be physically and permanently positioned on and/or in the vehicle for receiving user input. In addition to receiving control instructions from in-vehicle computing system or infotainment system 809, vehicle control system 930 may also receive input from one or more external devices 850 operated by the user, such as from mobile device 828. This allows aspects of vehicle systems 931 and vehicle control elements 961 to be controlled based on user input received from external devices 850.

In-vehicle computing system or infotainment system 809 may further include one or more antennas 906. The in-vehicle computing system may obtain broadband wireless internet access via antennas 906, and may further receive broadcast signals such as radio, television, weather, traffic, and the like. In-vehicle computing system or infotainment system 809 may receive positioning signals such as GPS signals via antennas 906. The in-vehicle computing system may also receive wireless commands via radio frequency (RF) such as via antennas 906 or via infrared or other means through appropriate receiving devices. In some embodiments, antenna 906 may be included as part of audio system 932 or telecommunication system 936. Additionally, antenna 906 may provide AM/FM radio signals to external devices 850 (such as to mobile device 828) via external device interface 912.

One or more elements of in-vehicle computing system or infotainment system 809 may be controlled by a user via user interface 918. User interface 918 may include a graphical user interface presented on a touch screen, such as touch screen 808 and/or display screen 811 of FIG. 8, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system or infotainment system 809 and mobile device 828 via user interface 918. In addition to receiving a user's vehicle setting preferences on user interface 918, vehicle settings selected by in-vehicle control system 930 may be displayed to a user on user interface 918. Notifications and other messages (e.g., received messages), as well as navigational assistance, may be displayed to the user on a display of the user interface. User preferences/information and/or responses to presented messages may be performed via user input to the user interface.

In-vehicle computing system or infotainment system 809 may be configured in accordance with the systems discussed herein. For example, In-vehicle computing system or infotainment system 809 may be employed in a scenario substantially similar to scenario 100, and/or may undertake methods substantially similar to method 500, method 600, and method 700. Thus, the same advantages that apply to the systems and methods discussed herein may apply to in-vehicle computing system or infotainment system 809.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the systems and methods described above with respect to FIGS. 1A through 7. The methods may be performed by executing stored instructions with one or more logic devices (e.g., processors) in combination with one or more additional hardware elements, such as storage devices, memory, image sensors/lens systems, light sensors, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

In this way, the disclosed systems and methods may ameliorate and/or address the problem of supporting wireless network communication between a user of a first vehicle and a user of a second vehicle, in which neither user might have any prior knowledge enabling them to address the other through a wireless communication network. Accordingly, a technical effect of implementing the systems and methods disclosed herein may be to enable vehicle users to send a variety of communications to other, unknown vehicle users, over wireless communication networks, despite having no prior knowledge of how to address those other vehicle users, and regardless of changes that may periodically occur to the addresses of those other vehicle users within the wireless communication networks (e.g., changes to their IP addresses).

As used herein, the term "approximately" is construed to mean plus or minus five percent of the range unless otherwise specified.

As used herein, the terms "substantially the same as" or "substantially similar to" are construed to mean the same as with a tolerance for variation that a person of ordinary skill in the art would recognize as being reasonable.

As used herein, an element or step recited in the singular and proceeded with the word "a" or "an" should be understood as not excluding plural of said elements or steps, unless such exclusion is stated.

As used herein, references to "one embodiment" or "one example" of the present disclosure are not intended to be interpreted as excluding the existence of additional embodiments that also incorporate the recited features.

As used herein, terms such as "first," "second," "third," and so on are used merely as labels, and are not intended to impose any numerical requirements, any particular positional order, or any sort of implied significance on their objects.

As used herein, terminology in which "an embodiment," "some embodiments," or "various embodiments" are referenced signify that the associated features, structures, or characteristics being described are in at least some embodiments, but are not necessarily in all embodiments. Moreover, the various appearances of such terminology do not necessarily all refer to the same embodiments.

As used herein, terminology in which elements are presented in a list using "and/or" language means any combination of the listed elements. For example, "A, B, and/or C" may mean any of the following: A alone; B alone; C alone; A and B; A and C; B and C; or A, B, and C.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. The scope of protection for the invention is defined by the appended claims.

## Claims

1. A method comprising:
processing (510), by a first vehicle (110), a set of first transmissions from a corresponding set of second vehicles (120, 130, 140, 150), each first transmission of the set of first transmissions carrying one or more fields of vehicle-identifying data, the vehicle-identifying data including a Global Navigation Satellite System, GNSS, position that does not comprise a network address for communicating with the respective second vehicle;
presenting (520), via a user interface of the first vehicle, a visual representation of the set of second vehicles and a proximal portion of an environment around the first vehicle, the visual representation including at least one of a map and a three-dimensional graphical representation on which the representation of the set of second vehicles is displayed;
detecting (530), via the user interface of the first vehicle, an indication of a selected second vehicle of the set of second vehicles;
establishing (540), by the first vehicle, a set of selected vehicle-identifying data based on the one or more fields of vehicle-identifying data of the first transmission of the set of first transmissions corresponding with the selected second vehicle;
generating (550), by the first vehicle, a second transmission carrying the set of selected vehicle-identifying data,
processing (560), by a server (190) remote from the first vehicle, the second transmission;
querying, by the server remote form the first vehicle, a table that associates vehicle-identifying data with communication network addresses using the set of selected vehicle-identifying date;
determining (570), by the server remote from the first vehicle, a communication network address for a communication protocol based on a result of the querying; and
generating (590), by the server remote from the first vehicle, a set of third transmissions carrying data for a communication to the selected second vehicle.

2. The method of claim 1,
wherein the first vehicle and the set of second vehicles participate in a subscription telecommunication service for identifying other vehicles that participate in the subscription telecommunication service.

3. The method of any preceding claim,
wherein the set of first transmissions include Vehicle-to-Everything (V2X) transmissions.

4. The method of any preceding claim,
wherein the communication to the selected second vehicle is selected from one of: a text message; an electronic mail (e-mail) message; an audio communication; and a video communication.

5. The method of claim 4,
wherein the communication network address for the communication protocol is an Internet Protocol (IP) address.

6. The method of any of claims 1 to 5,
wherein the server remote from the first vehicle maintains, for each second vehicle of the set of second vehicles, a record of corresponding sets of selected vehicle-identifying data and corresponding communication network addresses for the communication protocol.

7. The method of any of claims 1 to 6, comprising:
processing, by the server remote from the first vehicle, the set of third transmissions;
generating, by the server remote from the first vehicle, a set of fourth transmissions carrying the data for the communication to the selected second vehicle, the fourth transmissions being addressed to the communication network address for the communication protocol.

8. A system for inter-vehicle communicating with a vehicle for which a network address is not available to a first vehicle (110, 802), comprising:
a server (190) remote from the first vehicle;
an antenna (906),
an in-vehicle computing system (809) having a user interface (918);
one or more processors (914, 920); and
a non-transitory memory (908, 919B) having executable instructions that, when executed, cause the one or more processors to:
process a set of first transmissions, received through the antenna at the first vehicle, from a corresponding set of second vehicles, each first transmission of the set of first transmissions carrying a Global Navigation Satellite System, GNSS, vehicle position that does not comprise a network address for communicating with the respective second vehicle;
display, via the user interface, a visual representation of the set of second vehicles and a proximal portion of an environment around the first vehicle, the visual representation including at least one of a map and a three-dimensional graphical representation on which the representation of the set of second vehicles is displayed;
detect, via the user interface, an indication of a selected second vehicle of the set of second vehicles;
generate a second transmission, to send through the antenna, carrying the GNSS vehicle position carried by the first transmission corresponding with the selected second vehicle;
process, by the server remote from the first vehicle, the second transmission; query, by the server remote form the first vehicle, a table that associates vehicle-identifying data with communication network addresses using the set of selected vehicle-identifying date;
determine, by the server remote from the first vehicle, a communication network address for a communication protocol based on the result of the query; and
generate a set of third transmissions, to send through the antenna, carrying data for a communication to the selected second vehicle.

9. The system of claim 8, wherein the communication includes one of: a text message; an electronic mail (e-mail) message; an audio communication; and a video communication.

10. The system of claim 8 or 9,
wherein the first vehicle participates in a subscription telecommunication service for identifying other vehicles that participate in the subscription telecommunication service.

11. The system of claim 10, wherein the set of second vehicles participate in a subscription telecommunication service for identifying other vehicles that participate in the subscription telecommunication service, the executable instructions, when executed, causing the one or more processors to:
process another set of transmissions, received through the antenna, carrying vehicle-identifying data for the second vehicles of the set of second vehicles.

## Patentansprüche

1. Verfahren, umfassend:
Verarbeiten (510), durch ein erstes Fahrzeug (110),
eines Satzes erster Übertragungen von einem entsprechenden Satz zweiter Fahrzeuge (120, 130, 140, 150),
wobei jede erste Übertragung des Satzes erster Übertragungen ein oder mehrere Felder fahrzeugidentifizierender Daten trägt, wobei die fahrzeugidentifizierenden Daten eine Position eines globalen Navigationssatellitensystems (GNSS) beinhalten, die keine Netzwerkadresse zum Kommunizieren mit dem jeweiligen zweiten Fahrzeug umfasst;
Anzeigen (520),
über eine Benutzerschnittstelle des ersten Fahrzeugs, einer visuellen Darstellung des Satzes zweiter Fahrzeuge und eines proximalen Abschnitts einer Umgebung um das erste Fahrzeug, wobei die visuelle Darstellung mindestens eine von einer Karte und einer dreidimensionalen grafischen Darstellung beinhaltet, auf der die Darstellung des Satzes zweiter Fahrzeuge angezeigt wird;
Erfassen (530),
über die Benutzerschnittstelle des ersten Fahrzeugs, einer Angabe eines ausgewählten zweiten Fahrzeugs des Satzes zweiter Fahrzeuge;
Ermitteln (540),
durch das erste Fahrzeug, eines Satzes ausgewählter fahrzeugidentifizierender Daten basierend auf dem einen oder den mehreren Feldern fahrzeugidentifizierender Daten der ersten Übertragung des Satzes erster Übertragungen, die dem ausgewählten zweiten Fahrzeug entspricht;
Erzeugen (550),
durch das erste Fahrzeug, einer zweiten Übertragung, die den Satz ausgewählter fahrzeugidentifizierender Daten trägt,
Verarbeiten (560), durch einen von dem ersten Fahrzeug entfernten Server (190), der zweiten Übertragung;
Abfragen, durch den von dem ersten Fahrzeug entfernten Server, einer Tabelle, die fahrzeugidentifizierende Daten mit Kommunikationsnetzwerkadressen verknüpft, unter Verwendung des Satzes ausgewählter fahrzeugidentifizierender Daten;
Bestimmen (570),
durch den von dem ersten Fahrzeug entfernten Server, einer Kommunikationsnetzwerkadresse für ein Kommunikationsprotokoll basierend auf einem Ergebnis des Abfragens; und
Erzeugen (590),
durch den von dem ersten Fahrzeug entfernten Server, eines Satzes dritter Übertragungen, die Daten für eine Kommunikation an das ausgewählte zweite Fahrzeug tragen.

2. Verfahren nach Anspruch 1,
wobei das erste Fahrzeug und der Satz zweiter Fahrzeuge an einem Telekommunikationsdienst auf Abonnementbasis zum Identifizieren anderer, an dem Telekommunikationsdienst auf Abonnementbasis teilnehmender Fahrzeuge teilnehmen.

3. Verfahren nach einem der vorhergehenden Ansprüche,
wobei der Satz erster Übertragungen Fahrzeug-zu-Allem(V2X)-Übertragungen beinhaltet.

4. Verfahren nach einem der vorhergehenden Ansprüche,
wobei die Kommunikation an das ausgewählte zweite Fahrzeug aus einer der Folgenden ausgewählt ist: einer Textnachricht; einer E-Mail-Nachricht; einer Audiokommunikation; und einer Videokommunikation.

5. Verfahren nach Anspruch 4,
wobei die Kommunikationsnetzwerkadresse für das Kommunikationsprotokoll eine Internetprotokoll(IP)-Adresse ist.

6. Verfahren nach einem der Ansprüche 1 bis 5,
wobei der von dem ersten Fahrzeug entfernte Server für jedes zweite Fahrzeug des Satzes zweiter Fahrzeuge einen Datensatz entsprechender Sätze ausgewählter fahrzeugidentifizierender Daten und entsprechender Kommunikationsnetzwerkadressen für das Kommunikationsprotokoll pflegt.

7. Verfahren nach einem der Ansprüche 1 bis 6, umfassend:
Verarbeiten, durch den von dem ersten Fahrzeug entfernten Server, des Satzes dritter Übertragungen;
Erzeugen, durch den von dem ersten Fahrzeug entfernten Server, eines Satzes vierter Übertragungen, die die Daten für die Kommunikation an das ausgewählte zweite Fahrzeug tragen, wobei die vierten Übertragungen an die Kommunikationsnetzwerkadresse für das Kommunikationsprotokoll adressiert sind.

8. System zur Kommunikation zwischen Fahrzeugen mit einem Fahrzeug, für das eine Netzwerkadresse einem ersten Fahrzeug (110, 802) nicht zur Verfügung steht, umfassend:
einen von dem ersten Fahrzeug entfernten Server (190);
eine Antenne (906),
ein fahrzeuginternes Rechensystem (809), das eine Benutzerschnittstelle (918) aufweist;
einen oder mehrere Prozessoren (914, 920); und
einen nichttransitorischen Speicher (908, 919B), der ausführbare Anweisungen aufweist, die, wenn sie ausgeführt werden, den einen oder die mehreren Prozessoren dazu veranlassen:
einen Satz erster Übertragungen zu verarbeiten, die über die Antenne an dem ersten Fahrzeug,
von einem entsprechenden Satz zweiter Fahrzeuge empfangen werden, wobei jede erste Übertragung des Satzes erster Übertragungen eine Fahrzeugposition eines globalen Navigationssatellitensystems (GNSS) trägt, die keine Netzwerkadresse zum Kommunizieren mit dem jeweiligen zweiten Fahrzeug umfasst;
über die Benutzerschnittstelle eine visuelle Darstellung des Satzes zweiter Fahrzeuge und eines proximalen Abschnitts einer Umgebung um das erste Fahrzeug anzuzeigen, wobei die visuelle Darstellung mindestens eine von einer Karte und einer dreidimensionalen grafischen Darstellung beinhaltet, auf der die Darstellung des Satzes zweiter Fahrzeuge angezeigt wird;
über die Benutzerschnittstelle eine Angabe eines ausgewählten zweiten Fahrzeugs des Satzes zweiter Fahrzeuge zu erfassen;
eine zum Senden über die Antenne vorgesehene zweite Übertragung zu erzeugen, welche die Fahrzeugposition des globalen Navigationssatellitensystems (GNSS) trägt, die von der dem ausgewählten zweiten Fahrzeug entsprechenden ersten Übertragung getragen wird;
durch den von dem ersten Fahrzeug entfernten Server die zweite Übertragung zu verarbeiten;
durch den von dem ersten Fahrzeug entfernten Server unter Verwendung des Satzes ausgewählter fahrzeugidentifizierender Daten eine Tabelle abzufragen, die fahrzeugidentifizierende Daten mit Kommunikationsnetzwerkadressen verknüpft;
durch den von dem ersten Fahrzeug entfernten Server eine Kommunikationsnetzwerkadresse für ein Kommunikationsprotokoll basierend auf dem Ergebnis der Abfrage zu bestimmen; und
einen Satz zum Senden über die Antenne vorgesehener dritter Übertragungen zu erzeugen, die Daten für eine Kommunikation an das ausgewählte zweite Fahrzeug tragen.

9. System nach Anspruch 8, wobei die Kommunikation eine der Folgenden beinhaltet: eine Textnachricht; eine E-Mail-Nachricht; eine Audiokommunikation; und eine Videokommunikation.

10. System nach Anspruch 8 oder 9,
wobei das erste Fahrzeug an einem Telekommunikationsdienst auf Abonnementbasis zum Identifizieren anderer, an dem Telekommunikationsdienst auf Abonnementbasis teilnehmender Fahrzeuge teilnimmt.

11. System nach Anspruch 10, wobei der Satz zweiter Fahrzeuge an einem Telekommunikationsdienst auf Abonnementbasis zum Identifizieren anderer, an dem Telekommunikationsdienst auf Abonnementbasis teilnehmender Fahrzeuge teilnimmt, wobei die ausführbaren Anweisungen, wenn sie ausgeführt werden, den einen oder die mehreren Prozessoren dazu veranlassen:
einen weiteren Satz von Übertragungen zu verarbeiten, die über die Antenne empfangen werden und fahrzeugidentifizierende Daten für die zweiten Fahrzeuge des Satzes zweiter Fahrzeuge tragen.

## Revendications

1. Procédé comprenant :
le traitement (510), par un premier véhicule (110),
d'un ensemble de premières transmissions provenant d'un ensemble correspondant de seconds véhicules (120, 130, 140, 150),
chaque première transmission de l'ensemble de premières transmissions transportant un ou plusieurs champs de données d'identification de véhicule, les données d'identification de véhicule incluant une position du système mondial de navigation par satellite, GNSS, qui ne comprend pas une adresse de réseau pour communiquer avec le second véhicule respectif ;
la présentation (520),
via une interface utilisateur du premier véhicule, d'une représentation visuelle de l'ensemble de seconds véhicules et d'une partie proximale d'un environnement autour du premier véhicule, la représentation visuelle incluant au moins l'une parmi une carte et une représentation graphique tridimensionnelle sur laquelle la représentation de l'ensemble de seconds véhicules est affichée ;
la détection (530),
via l'interface utilisateur du premier véhicule, d'une indication d'un second véhicule sélectionné de l'ensemble de seconds véhicules ;
l'établissement (540),
par le premier véhicule, d'un ensemble de données d'identification de véhicule sélectionnées sur la base du ou des champs de données d'identification de véhicule de la première transmission de l'ensemble de premières transmissions correspondant au second véhicule sélectionné ;
la génération (550),
par le premier véhicule, d'une deuxième transmission transportant l'ensemble de données d'identification de véhicule sélectionnées,
le traitement (560), par un serveur (190) distant du premier véhicule, de la deuxième transmission ;
l'interrogation, par le serveur distant du premier véhicule, d'un tableau qui associe des données d'identification de véhicule à des adresses de réseau de communication en utilisant l'ensemble de données d'identification de véhicule sélectionnées ;
la détermination (570),
par le serveur distant du premier véhicule, d'une adresse de réseau de communication pour un protocole de communication sur la base d'un résultat de l'interrogation ; et
la génération (590),
par le serveur distant du premier véhicule, d'un ensemble de troisièmes transmissions transportant des données pour une communication avec le second véhicule sélectionné.

2. Procédé selon la revendication 1,
dans lequel le premier véhicule et l'ensemble de seconds véhicules participent à un service de télécommunications par abonnement pour identifier d'autres véhicules qui participent au service de télécommunications par abonnement.

3. Procédé selon une quelconque revendication précédente,
dans lequel l'ensemble de premières transmissions inclut des transmissions de type « véhicule à tout » (V2X).

4. Procédé selon une quelconque revendication précédente,
dans lequel la communication avec le second véhicule sélectionné est choisie parmi l'un des éléments suivants : un message texte ; un message de type courrier électronique (e-mail) ; une communication audio ; et une communication vidéo.

5. Procédé selon la revendication 4,
dans lequel l'adresse de réseau de communication pour le protocole de communication est une adresse de protocole Internet (IP).

6. Procédé selon l'une quelconque des revendications 1 à 5,
dans lequel le serveur distant du premier véhicule conserve, pour chaque second véhicule de l'ensemble de seconds véhicules, un enregistrement d'ensembles correspondants de données d'identification de véhicule sélectionnées et d'adresses de réseau de communication correspondantes pour le protocole de communication.

7. Procédé selon l'une quelconque des revendications 1 à 6, comprenant :
le traitement, par le serveur distant du premier véhicule, de l'ensemble de troisièmes transmissions ;
la génération, par le serveur distant du premier véhicule, d'un ensemble de quatrièmes transmissions transportant les données pour la communication avec le second véhicule sélectionné, les quatrièmes transmissions étant adressées à l'adresse de réseau de communication pour le protocole de communication.

8. Système de communication inter-véhicules avec un véhicule pour lequel une adresse de réseau n'est pas disponible pour un premier véhicule (110, 802), comprenant :
un serveur (190) distant du premier véhicule ;
une antenne (906),
un système informatique embarqué (809) ayant une interface utilisateur (918) ;
un ou plusieurs processeurs (914, 920) ; et
une mémoire non transitoire (908, 919B) ayant des instructions exécutables qui, lorsqu'elles sont exécutées, amènent le ou les processeurs à :
traiter un ensemble de premières transmissions, reçues par l'intermédiaire de l'antenne au niveau du premier véhicule,
provenant d'un ensemble correspondant de seconds véhicules, chaque première transmission de l'ensemble de premières transmissions transportant une position de véhicule du système mondial de navigation par satellite, GNSS, qui ne comprend pas une adresse de réseau pour communiquer avec le second véhicule respectif ;
afficher, via l'interface utilisateur, une représentation visuelle de l'ensemble de seconds véhicules et d'une partie proximale d'un environnement autour du premier véhicule, la représentation visuelle incluant au moins l'une parmi une carte et une représentation graphique tridimensionnelle sur laquelle la représentation de l'ensemble de seconds véhicules est affichée ;
détecter, via l'interface utilisateur, une indication d'un second véhicule sélectionné de l'ensemble de seconds véhicules ;
générer une deuxième transmission, à envoyer par l'intermédiaire de l'antenne, transportant la position de véhicule GNSS transportée par la première transmission correspondant au second véhicule sélectionné ;
traiter, par le serveur distant du premier véhicule, la deuxième transmission ;
interroger, par le serveur distant du premier véhicule, un tableau qui associe des données d'identification de véhicule à des adresses de réseau de communication en utilisant l'ensemble de données d'identification de véhicule sélectionnées ;
déterminer, par le serveur distant du premier véhicule, une adresse de réseau de communication pour un protocole de communication sur la base d'un résultat de l'interrogation ; et
générer un ensemble de troisièmes transmissions, à envoyer par l'intermédiaire de l'antenne, transportant des données pour une communication avec le second véhicule sélectionné.

9. Système selon la revendication 8, dans lequel la communication inclut l'un des éléments suivants : un message texte ; un message de type courrier électronique (e-mail) ; une communication audio ; et une communication vidéo.

10. Système selon la revendication 8 ou 9,
dans lequel le premier véhicule participe à un service de télécommunications par abonnement pour identifier d'autres véhicules qui participent au service de télécommunications par abonnement.

11. Système selon la revendication 10, dans lequel l'ensemble de seconds véhicules participe à un service de télécommunications par abonnement pour identifier d'autres véhicules qui participent au service de télécommunications par abonnement, les instructions exécutables, lorsqu'elles sont exécutées, amenant le ou les processeurs à :
traiter un autre ensemble de transmissions, reçues par l'intermédiaire de l'antenne, transportant des données d'identification de véhicule pour les seconds véhicules de l'ensemble de seconds véhicules.
